(19) Europäisches Patentamt
European Patent Office
Office européen des brevets

(11) **EP 4 012 610 A1**

(12) **EUROPEAN PATENT APPLICATION**

(43) Date of publication:
**15.06.2022 Bulletin 2022/24**

(21) Application number: **20213492.0**

(22) Date of filing: **11.12.2020**

(51) International Patent Classification (IPC):
**G06K 9/32** *(2006.01)* **G06K 9/46** *(2006.01)*

(52) Cooperative Patent Classification (CPC):
**G01N 35/00732; G06V 10/25; G06V 10/56;**
G01N 2035/0412

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BIOMERIEUX**
**69280 Marcy-L'Etoile (FR)**

(72) Inventors:
• **CARIGNANO, Andrea**
**51100 PISTOIA (IT)**

• **CARADONNA, Gionatan**
**53034 COLLE DI VAL D'ELSA (IT)**
• **TRAVERSI, Andrea**
**59100 PRATO (IT)**
• **SALVADORI, Marco**
**50126 Florence (IT)**

(74) Representative: **bioMérieux PI Groupement
mandataires
bioMérieux
69280 Marcy l'Etoile (FR)**

(54) **DETECTION METHOD FOR SAMPLE PRESENCE AND DEVICE ASSOCIATED**

(57) The invention relates to a detection method of liquid presence inside a well of a transparent or translucent support intended for analysis performed in a device for in vitro detection and/or quantification, the presence of liquid being assessed on the basis of an index of visible pattern likelihood representative of the probability of a pattern to be legible as expected in the field of view of an imager. Said invention allows preventing assay execution without sample and can be applied without wasting sample or sample well support in case of the sample well is not filled by the user. Moreover, this method allows a precise detection of the samples that are transparent or translucent, with low reflectance.

Fig. 2

## Description

### Technical Field

The invention relates to a detection method for detecting liquid presence in a well before analysis of said liquid in an analysis device. More particularly, the liquid can be a biological sample and the device that performs said detection method can be configured for in vitro detection and/or quantification of at least one analyte in said biological sample. Therefore, the invention can be used in automated devices for in vitro diagnosis in the clinical field and industrial fields. Especially, the invention can be applied to the range of instruments VIDAS® commercialized by the applicant.

### Background

When conducting a biological assay, the sample well has to be preliminarily filled with the sample by the user and prior to starting executions of any following operations such as detection and quantification of microorganisms/analytes or else, depending on the biological assay's type. The result of some assays could be incorrect just because the step of manual introduction of the sample is omitted or wrongly done and the device that is supposed to analyze said sample is not able to detect this type of error (sample missing or deficient or insufficient).

It is known from the document WO10029471 A1, a method for determining the presence of a sample on a sample receiving surface, the method comprising the following steps : (i) directing an input light beam onto the sample receiving surface using an optical element arranged in near-field contact with the sample receiving surface; (ii) determining a reflected light intensity in an output light beam being totally internally reflected inside the optical element using a light detector; (iii) and comparing the reflected light intensity with a predetermined light intensity, wherein the result of the comparison is indicative of the presence of the sample on the sample receiving surface.

It exists a lot of different ways to detect sample presence inside the analyzing device by light reflection analysis. The problem is when the sample is transparent with low reflectance. Indeed, it is quite difficult to detect the presence of the sample inside the well. Furthermore, when the well is made of transparent plastic, the presence detection becomes complicated with interference of reflectance.

### Object of the invention

One of the main goal of the invention is to provide a detection method that enables detecting liquid presence in at least one well which can be transparent or translucent at least partially with low reflectance. Obviously, this detection method according to the invention can be applied to any sorts of well and any sorts of liquids but is specifically detailed hereinafter for liquids that causes problems of reflectance and cannot be detected easily by the prior art techniques. The aim of the method enables simple automated process to avoid launching a faulty well in analysis and enables correcting error before analysis launch.

Therefore, it is an object of the invention to provide a detection method of liquid presence inside a well of a transparent or translucent support intended for analysis performed in an automated device for example for in vitro detection and/or quantification, the detection method comprising at least the following steps :

A. providing a system comprising :

- a support comprising at least one well configured to be filled with liquid to analyze,
- a device for example for in vitro detection and/or quantification, comprising :

  ◦ a base configured to receive at least one support,
  ◦ one control unit storing at least one reference image,
  ◦ one imager with a field of view, the imager being controlled by the control unit and being configured to acquire at least one image of the field of view, the control unit being configured to process the at least one image acquired by the imager,

- at least one pattern comprising at least one linear part, the pattern being arranged to be overlapped, at least partially, by the liquid to be analyzed, when the well is filled,

B. loading the support on a base of the device, the at least one well of the support being positioned in the field of view,
C. acquiring at least one image of the field of view by the imager,
D. sending the acquired image to the control unit,
E. determining the position of the pattern in the acquired image by :

E1. performing at least a plurality of first scans scanning along a first direction, said first scans being distributed in a direction different from the first direction

E2. determining a plurality of coincidence descriptors representative of whether the first scans have crossed the linear part of the pattern,

E3. performing at least a plurality of second scans extending in the second direction and being distributed in the first direction apart from each other, said second scans scanning along the first direction,

E4. determining at least one line similarity descriptor showing if the second scans overlap at least partially the pattern,

F. assessing the presence of the liquid in the well of the support based on a percent index of visible pattern likelihood representative of the probability of the linear part of the pattern to be legible as expected in the field of view, the percent index of visible pattern likelihood being function of coincidence descriptors and line similarity descriptors.

Firstly, the detection method of the invention allows preventing assay execution without sample, for example, and can be applied without wasting liquid or support in case of the well is not filled by the user. Moreover, this method allows a precise presence detection of the liquids that are transparent or translucent, with low reflectance. Indeed, with this method, it is possible to detect any deformation or disappearance of the pattern caused by the presence of the liquid in the well. This kind of method can be applied to any sample that is quite difficult to see when it is within the well. Advantageously, the method can be effective with opaque liquids as the pattern is undetectable in this case (completely masked by the opacity of the liquid).

Another advantage of this detection method is that the detection is contactless. Indeed, the detection is performed through the support and there is no use of probes or other devices that could contaminate the liquid and more specifically the biological sample.

The method of the invention is advantageously completed by the following different features taken alone or according to their different possible combinations.

According to one feature of the invention, the liquid is a biological sample and the at least one well is a sample well.

Advantageously, the control unit stores a reference image corresponding to at least one image of the pattern taken without a support and liquid overlapping said pattern. The reference image allows determining the expected spatial positions and characteristics (form, grey level) of the pattern, i.e. where the algorithm of the control unit shall look for the pattern in the field of view during detection method according to the invention.

Preferably, the reference image is made binary thanks to a threshold predetermined by minimizing the inter-class variance of the histogram of the image, following Otsu's method. The pattern in the reference image is arranged in the area where pixels of the picture are set to 1.

According to one feature of the invention, the method can comprise a step consisting in performing a calibration procedure to adjust the position of the pattern known from the reference image in order to take any mechanical drift into consideration.

According to one feature of the invention, the first scans are scanning along a vertical direction, said first scans are performed at predetermined positions and at least one first scan is centered in the field of view.

According to one feature of the invention, the first scans are distributed horizontally.

According to one feature of the invention, the first scans are distributed apart from each other.

According to one feature of the invention, each scanning area of each first scan is distinct.

According to one feature of the invention, the plurality of first scans comprises at least three first scans, including one centered in the field of view of the imager called "centered first scan".

Preferably, other first scans are positioned fully within the field of view.

Preferably, the other first scans are distributed at a determined distance compared to the centered first scan. More preferentially, other first scans are arranged symmetrically relative to the centered first scan.

According to one feature of the invention, each first scan is at least 1 pixel wide. Preferably, a width between 2 to 5 pixels is chosen, because it is robust enough to artefacts and enables avoiding losing information about the image because of the averaging step. From each first scan, a linear array is obtained calculating the average value of its pixels at the same height, if the width of said each first scan is greater than 1 pixel.

According to one feature of the invention, each first scan scans a line of pixels that is at least one pixel wide, and for each line scanned a grey level value is determined by calculating the average of grey level of pixels of said scanned line.

According to one feature of the invention, in the substep E2, the control unit considers that the first scans have crossed the linear part of the pattern when the peaks of grey level of each first scan have the same coordinates and the same amplitude.

According to the invention, the centered first scan is bound to have at least one peak of grey level, since the linear part of the pattern is supposed to be in the field of view. If there is no peak of grey level for the centered first scan, the control unit considers that the linear part of the pattern is not visible and therefore considers that there is liquid in the field of view. If there is at least one peak of grey level for the centered first scan but no peak of grey level for one of the other first scans, said other first scans are repeated, with X coordinate adjusted by a determined number of pixels.

According to one feature of the invention, the adjustment of the number of pixels of the new vertical scan is determined by performing a shift by a value of pixels, which depends on several factors amongst the imager's resolution and its closeness to the surface where the pattern is etched.

According to one feature of the invention, wherein among the coincidence descriptors, there are position descriptors and amplitude descriptors. The advantage of having at least two different types of coincidence descriptors and in particular position descriptors and amplitude descriptor is to have an efficient system to detect presence of a liquid and to cross information to have preciseness. Indeed, if the method was based only on position descriptors or only on amplitude descriptors, the method may lose effectiveness : liquids may modify grey levels of a limited part of the pattern and if only position descriptors were used, it would lead to failure of detection.

Since the pattern's position is known from a calibration procedure and/or based on the reference image, the mean peak position of each scan is expected to be in a determined range, indeed the pattern position shall be positioned within a tolerance assessed experimentally.

According to one feature of the invention, the position descriptors include at least (i) an absolute position descriptor representative of the position of a peak of grey level of each first scans in a determined range and (ii) the second feature is a relative position descriptor representative of the distance between each peak of grey level of each first scans.

According to one feature of the invention, the absolute position descriptor of a first scan results from the comparison of the position of the peak of grey level of the first scan with a reference position independent from the position of the peaks of the other first scans, the value of the absolute position descriptor is increased by a predefined score, for example of 1, if the peak of grey level of the first scan is found by the control unit within a determined range and if each first scan has a peak of grey level. This is applied to each first scan and for every first scan that has a peak in the expected range.

According to one feature of the invention, if the value if this descriptor is zero, that means that no peak was found in any of the n scans and liquid is detected as making the pattern not visible to imager:

$$Absolute\ position\ descriptor = \sum_{i=1}^{n\ scans}(1\ if\ PEAK(i)\ absolute\ position\ is\ within\ a\ range, else\ 0)$$

According to one feature of the invention, the relative position descriptor results from the comparison of the position of the peak of grey level of each first scan with a mean peak position corresponding to the average of each position of peaks of grey level of each first scan : if the distance, in pixels, between the position of the peak of grey level and the mean peak position is within an expected range, the relative position descriptor has a predefined score, and if the distance, in pixels, between each peak and the mean peak position is out of the expected range, the relative position descriptor has a score of 0. This is applied to each first scan and for every first scan that has a peak in the expected range.

$$Relative\ position\ descriptor =$$

$$\sum_{i=1}^{n\ scans}(1\ if\ PEAK(i) relative\ position\ is\ less\ than\ n\ pixels\ far, else\ 0)$$

According to one feature of the invention, the amplitude descriptors are calculated for each peak of grey level according to the formula :

$$Amplitude\ descriptor = \sum_{i=1}^{n\ scans}(1\ if\ PEAK(i)\ amplitude\ is\ within\ a\ range, else\ 0)$$

If the difference, in grey levels, between each peak and the mean peak amplitude is within an expected range, the value of the amplitude descriptor is increased by a score of 1. The limits of the expected range are absolute values of grey levels, as grey levels are normalized and distributed over a full range (0-255) by preprocessing the image in advance.

If the distance, in grey levels, between each peak and the mean peak amplitude is out of the expected range, the score of the amplitude descriptor resulting is 0.

According to one feature of the invention, all coincidence descriptors are summed together in a "overall descriptor" for the first scans.

According to the invention, possible translation of the pattern or glares due to presence of liquid can cause outlier peaks of grey level.

According to one feature of the invention, if peaks of grey level are found outside the expected range with an amplitude comprised above a predetermined threshold x%, for example 50%, of the mean amplitude of peaks found in the expected range, then the overall descriptor is decreased by a value of 1 for each outlier peak being found.

Outlier descriptor =

$$\sum_{i=1}^{N\ outlier\ peaks} (-1\ if\ PEAK(i)\ amplitude\ is\ larger\ that\ x\%\ of\ mean\ amplitude\ of\ peaks, else\ 0)$$

Overall descriptor = absolute position descriptor + relative position descriptor + amplitude descriptor + outlier descriptor

According to one feature of the invention, the second scans are scanning along a horizontal direction, said second scans are performed at predetermined positions.

According to one feature of the invention, the second scans are distributed vertically.

According to one feature of the invention, the second scans are distributed apart from each other.

According to one feature of the invention, each scanning area of each second scan is distinct.

According to one feature of the invention, the plurality of second scans comprises at least three second scans, including one centered in the field of view of the imager called "centered second scan".

Preferably, other second scans are positioned fully within the field of view and distributed at a determined distance compared to the centered second scan. More preferentially, other second scans are arranged upwardly and downwardly relative to the central second scan.

According to one feature of the invention, each second scan scans at least one row of pixels, which is at least one pixel high, and for each row scanned a grey level value is determined by calculating the average of grey level of pixels of said scanned row. If the height of the scanned row is greater than 1 pixel, then the a mean value for the scanned row is calculated.

According to one feature of the invention, steps E1 and E2 are performed before steps E3 and E4. Alternately, steps E3 and E4 are performed before steps E1 and E2.

According to one feature of the invention, n grey level functions are determined by comparing point-to-point the grey level values of the centered second scan with another second scan.

According to one feature of the invention, at least a first grey level function is determined by the point-to-point difference between values of grey level of the central second scan and the values of grey level of at least one upward second scan.

According to one feature of the invention, at least a second grey level function is determined by the point-to-point difference between values of grey level of the central second scan and the values of grey level of at least one downward second scan.

According to one feature of the invention, in the case of multiple upward second scans, it can be considered the only upward second scan having the highest average value of grey level.

According to one feature of the invention, in the case of multiple downward second scans, it can be considered the only downward second scan having the highest average value of grey level.

According to one feature of the invention, the substep E4 consisting in determining at least one line similarity descriptor comprises the following substep :

(i) Determining n grey level functions based on comparison point-to-point between grey level values of the second centered scan and grey level values of at least one other second scan,

(ii) Determining the value of the line similarity descriptor based on the grey level functions determined previously.

According to one feature of the invention, if all the grey level functions are negative, the line similarity descriptor is considered null, if at least one grey level functions is positive, the line similarity descriptor is considered not null and therefore the linear part of the pattern of the image acquired may be legible by the imager.

According to one feature of the invention, the method comprises a step E5 of determining the profile of the linear part of the pattern consisting in comparing an average grey level of each grey level functions with each other, the grey level function with the greatest average grey level value is considered by the control unit as representing the most likely profile for the linear part of the pattern of the image acquired. Advantageously, the average value of a grey level function is the sum of every point of the function divided by the number of points of the function. If there is several grey level functions, one is selected over the others to be used in the steps of the algorithm, specifically only the one with the greatest average values moves forward to next steps

Advantageously, when the control unit considers that it is compatible with the absence of the liquid within the field of view, it means that the control unit considers that there is no liquid in the well. Advantageously, when the control unit considers that it is not compatible with the absence of the liquid within the field of view, it means that the control unit considers that there is liquid in the well.

According to one feature of the invention, wherein the step F comprises a substep F1 of normalizing the overall descriptor and the line similarity descriptors.

According to one feature of the invention, the normalization of the overall descriptor is performed by transforming the [-N, 3*n first scans] range into a [0, 100] range wherein:

- 3 is the maximum value for the descriptor of each n first scan, as +1 can be given for the absolute position descriptor, +1 for the relative position descriptor and +1 for the amplitude descriptor,
- N is the number of outlier descriptors and contributing -1 each.

According to one feature of the invention, the normalization of the line similarity descriptors is performed by transforming the [0-MAX] range into [0-100] range, wherein MAX = N points of the scan *1,5, MAX being the highest possible value of the line similarity descriptor.

According to one feature of the invention, the step F comprises a substep F2 of averaging the normalized overall descriptor and the normalized line similarity descriptor as following :

Visible pattern likelihood index = normalized line similarity descriptor/2 + normalized overall descriptor/2.

According to one feature of the invention, if the visible pattern likelihood index is within a determined range, the pattern of the acquired image is at the expected position based on a reference image, and therefore the control unit considers that it is compatible with the absence of the liquid within the field of view.

According to one feature of the invention, if the percent index is out of the said determined range, the pattern of the acquired image is not at the expected position based on the reference image, the control unit considers that it is not compatible with the absence of the liquid within the field of view.

According to one feature of the invention, the determined range of the visible pattern likelihood index is between 65% to 85%.

It another object of the invention to provide a system for in vitro detection and/or quantification of at least one analyte in a biological sample, comprising :

a. an at least partially transparent or translucent support comprising at least one well configured to held a liquid,
b. a device comprising :

- a base configured to receive at least one support,
- one control unit,
- one imager with a field of view, said imager being controlled by the control unit and being configured to acquire at least one image of at least one well of the support,

characterized in that the system comprises at least one pattern comprising at least one linear part and being intended to be overlapped, at least partially, by the liquid and in that the imager is configured to acquire at least one image of the field of view and in that the control unit is configured to determine the presence of the liquid in the well based on the at least one image acquired by the imager.

According to the invention, a linear part of the pattern is the part of the pattern, which is constituted by points that form a straight line.

Advantageously, the opening through which the imager sees, is not circular, rather elliptical, therefore, the linear part of the pattern is likely to be seen when the linear part is extending along a horizontal direction rather than along a vertical direction.

Advantageously, linear parts in a pattern simplify algorithms more than other parts in a pattern, as basic computer vision mechanisms can be applied, like vertical scans of the image and checking for transitions from "white" to "black" and vice-versa.

According to one feature of the invention, the pattern is directly etched on the base of the device.

Alternately and according to one feature of the invention, the pattern is directly etched on the back of the support. Preferably on the back of at least one well of the support.

According to one feature of the invention, the pattern is engraved by laser etching or marked or engraved by any suitable techniques known.

According to one feature of the invention, outlier peaks of grey level are representative of a deformation of at least a part of the pattern.

For the purpose of the invention, it has to be noted that the image acquired is composed of a plurality of lines and rows of pixels. Furthermore, the acquired image is in bitmap format or jpeg format.

According to one feature of the invention, the pattern extends along the entire length of the base or the pattern is repeated along the entire length of the base.

According to one feature of the invention, when the support is positioned on the base, a part of the pattern or a pattern is visible in at least one well and preferably in each well of the support. These configurations allow applying detection to any of the wells of the support by selecting the corresponding region of interest.

According to one feature of the invention, the pattern comprises at least one linear part extending in a horizontal direction.

Advantageously, the shape and geometry of the pattern are chosen as appropriate and so that effects of image distortion are amplified and along with giving robustness to every mechanical tolerance (position of camera, position of etched mark, position of VIDAS strip, strip-manufacturing tolerances, etc.). For example, a grid is a planar pattern and with geometry so that images are not affected by errors and tolerances on X Y positions. Specifically, a grid shaped pattern, that covers an entire region of interest, can be still visible even though camera is moved on X, Y direction to a certain extent. Another possible option for the pattern might be a sort of triple cross or other that looks like a planar pattern, but with a central element (pillar) that can allow detecting change in sizes.

According to one feature of the invention, the imager is a 2D camera device.

According to one feature of the invention, the imager is configured to acquired and decode an identification code of the support when framed in the field of view, and to send the decoded identification code to the control unit. The imager is also advantageously configured to acquire the image of the field of view and to send it out to the control unit, which is provided with a computer vision algorithm for pattern recognition.

According to one feature of the invention, the identification code can be a linear or 2D code.

According to one feature of the invention, the imager is placed above the sample well of the support, in order to frame a region of interest within the whole image.

According to one feature of the invention, the imager comprises an illumination system assembled on board and allowing for robust embedded application, even in the case of partial or total environmental light exposure. Therefore, additional and external illumination systems are useless. As the position below the well, where pattern is, is just marginally exposed to any stray light not provided by the imager illuminator, immunity to environmental light is facilitated.

According to one feature of the invention, the imager is positioned so that the optical axis of the imager is directed on an axis, which forms an angle (a) with the base of the device, said angle being in the range between 67° and 77°. An angle of 90° is excluded because the optical axis is perpendicular to the base, the light of the illumination system would be reflected, hence hindering the recognition of the pattern when the sample well is empty. The range of angle selected allows framing the pattern and bottom of the well as appropriate.

For example, the identification code indicates the type of reagent and/or the manufacturing lot number.

The control unit comprises a computer vision algorithm embedded in firmware of the electronic board to which the imager is connected.

According to one feature of the invention, the support of the system comprises at least one sample well wherein the biological sample is intended to be put.

According to one feature of the invention, the sample well is positioned in the field of view of the imager in order to be framed in a field of view within the whole image.

According to one feature of the invention, the sample well is transparent or translucent.

## Brief description of figures

The invention will be better understood, thanks to the description below, which relates to embodiments according to the present invention, given by way of non-limiting examples and explained with reference to the accompanying schematic figures. The attached schematic figures are listed below:

- Figure 1 is a representation of the device of the invention's system,
- Figure 2 is a schematic representation of the system of the invention
- Figure 3 is a partial representation of the base of the device of the invention with supports on it,

- Figure 4 is a partial representation of the base of the device of the invention
- Figures 5 to 7 are representations of possible patterns etched on the base of the device of the invention,
- Figure 8 is an image taken in the field of view of the imager, of the base of the device of the invention without support,
- Figure 9 is an image taken in the field of view of the imager of the base of the device of the invention with an empty support on it,
- Figure 10 is an image taken, in the field of view of the imager, of the base of the device of the invention with a support filled of liquid on it,
- Figure 11 is a schematic representation of the steps of the method of the invention.

**Detailed description**

The invention relates to a method of detection of liquid presence and a system 100 that performs this detection method.

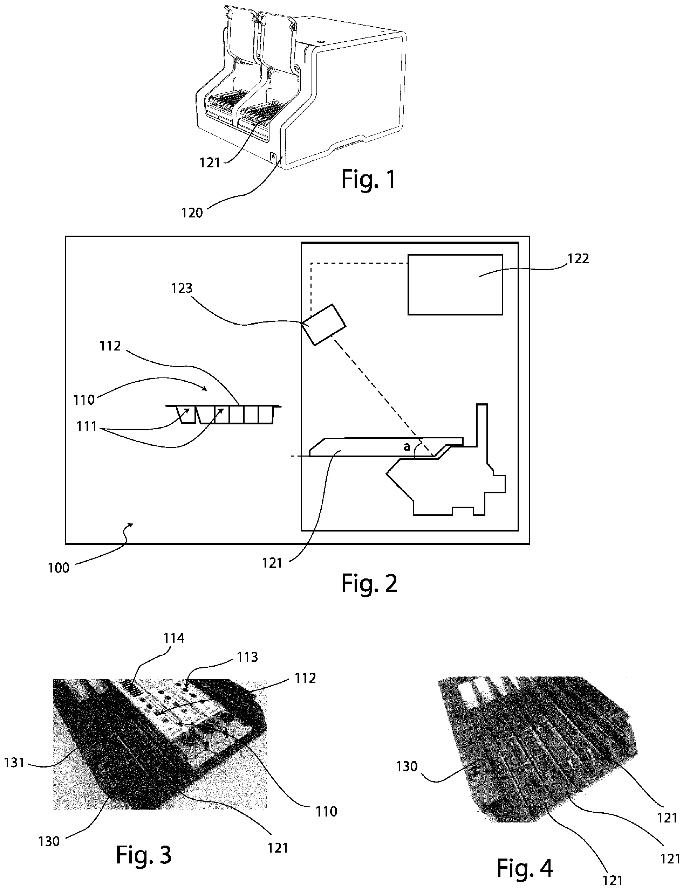

Firstly, the system 100 of the invention will be described in reference to figures 1 to 4.

According to the invention, the system 100 of the invention is a system for in vitro detection and/or quantification of at least one analyte in a biological sample. The detection method of the invention is therefore preferably performed in order to detect the presence of the biological sample in a liquid form in the system before processing an in vitro detection and/or an in vitro quantification.

The system 100 comprises a support 110 and a device 120.

The support 110 is advantageously a strip comprising several wells 111. One well 111 is dedicated into receiving a biological sample to be tested and is called sample well. The sample well 111 is transparent or translucent at least at the bottom. Preferably and according to the invention, the support is totally translucent or transparent. The biological sample to be analyzed is in the form of a liquid that is manually put in the sample well 111. The support comprises a foil 112 that covers the support 110 sealingly, said foil 112 comprises frangible windows 113 arranged in front of wells 111. The support 110 comprises at least one identification code 114 such as QR code or barcode, marked on the label of the foil 112 as illustrated in figure 3. For example, the identification code indicates the type of reagent and/or the manufacturing lot number.

The windows 113 are intended to be pierced by at least one pipetting tool (not shown) in order to mix together the content of the wells or to wash or to transfer liquids from one well to another, etc.

The device 120 is illustrated in figure 1 and comprises a base 121 configured to receive a plurality of support 110, one control unit 122, one imager 123 with a field of view as illustrated in figure 2.

According to the invention, the imager 123 is controlled by the control unit 122 and is configured to acquire at least one image of the field of view and therefore at least one well 111 of the support 110, when said support 110 is in the field of view of the imager 123. The imager 123 is preferably a 2D camera device configured to acquired and decode the identification code 114 of the support 110 or the data-matrix of the disposable cone (not shown), when either framed, and to send the decoded texts to the control unit 122. The imager 123 comprises an illumination system 1231 as illustrated in figure 2. According to the illustrated embodiment in figure 2 and according to the invention, the imager 123 is positioned so that the optical axis of the imager 123 is directed on an axis X-X, which forms an angle with the base 121 of the device 120, said angle being in the range between 67° and 77°.

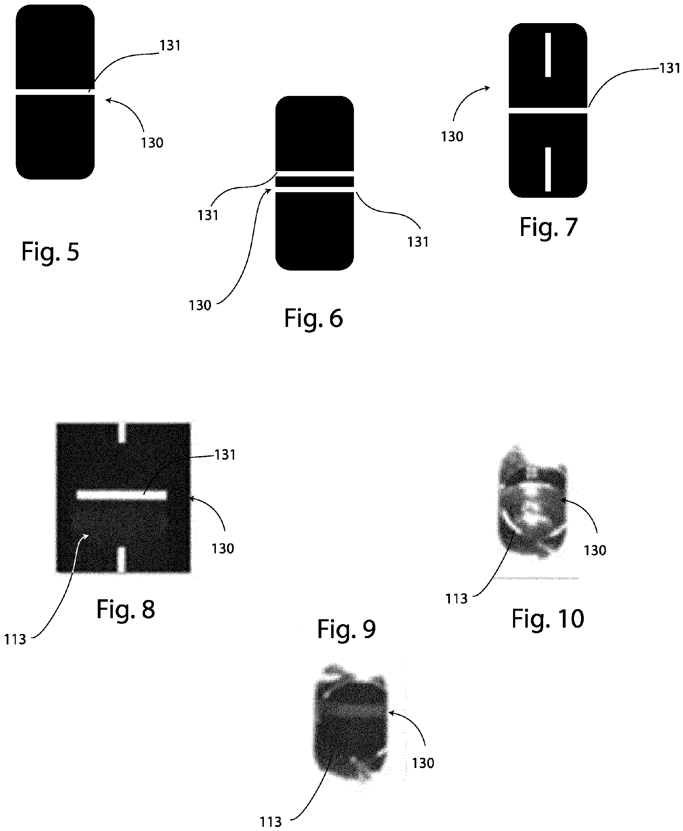

The control unit 122 is provided with a computer vision algorithm for pattern recognition said computer vision algorithm is embedded in a firmware of the electronic board to which the imager 123 is connected. Advantageously, the computer vision algorithm will leverage the way the presence liquid affects the image of the known pattern and according to its transparency, in the presence of opaque liquid the mark would simply be invisible, rather, with transparent or semitransparent liquid within the well, the image of the mark would look distorted and/or shifted or simply not visible (see figure 10) and with liquid acting as lens-set. Furthermore, liquid, when present, may reflect light emitted by the lighting system of the camera and causing glares that, appearing in image, may hinder pattern to be recognized.

According to the invention, the system 100 comprises at least one pattern 130 comprising at least one linear part 131 extending horizontally as illustrated in figures 5 to 8. The pattern 130 is being intended to be overlapped, at least partially, by a liquid supposedly in a well 111 in the field of view of the imager 123. The imager 123 is configured to acquire at least one image of the field of view and the control unit 122 is configured to determine the presence of the liquid in the well 111 based on the at least one image acquired by the imager 123.

Possible patterns are illustrated in figures 5 to 7.

The figure 5 represents a pattern 130 according to the invention, with only one horizontal line that corresponds to the linear part 131 of the pattern, and extends on the entire width of the support. The figure 6 illustrates another embodiment possible for the pattern 130 according to the invention, with two lines and therefore two linear parts arranged at a distance from each other. The two linear parts 131 are extending horizontally and are distributed in a vertical direction.

The figure 7 illustrates another embodiment of the pattern 130 according to the invention, with one linear part 131 centered and two vertical lines positioned symmetrical relative to the linear part 131. Advantageously, vertical elements of figure 7 are not framed by the detection algorithm, and are used to facilitate centering the camera during the assembling of the device.

The pattern 130 can be seen through the windows 113 of the support when the support 110 is positioned on the base and said windows are pierced, as illustrated in figure 9.

In the embodiment illustrated in figures 3 and 4, the pattern 130 is directly etched on the base 121 of the device and the supports 110 are positioned on it, as illustrated in Figure 3. Moreover, in order to detect any liquid in any of the well 111 of the support 110, the pattern 130 is advantageously, repeated the entire length of the base. When the support 110 is positioned on the base 121, a part of the pattern or a pattern 130 is visible in at least one well 111 as it can be seen in Figure 9 when there is no liquid in the well. When there is liquid in the well, glares could appear and distortion of the pattern as well and as illustrated in figure 10.

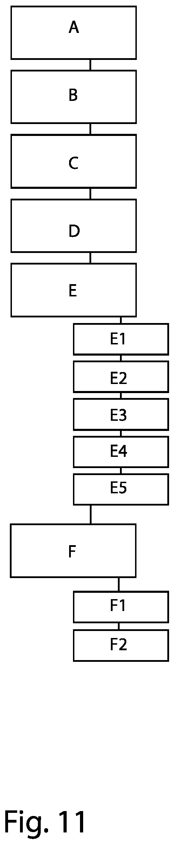

The detection method according to the invention will be described hereinafter in reference to figure 11. The detection method comprises at least the following steps :

- Step A : providing a system 100 according to the invention and described above.
- Step B : loading the support 110 on the base 121 of the device 120, the at least one well 111 of the support 110 being positioned in the field of view of the imager 123,
- Step C : acquiring by the imager 123, at least one image of the field of view,
- Step D : sending the acquired image to the control unit 122,
- Step E : determining the position of the pattern 130 in the acquired image.

The Step E comprises at least one first substep E1 consisting in performing at least a plurality of first scans scanning along a first direction, said first scans being distributed in a direction different from the first direction.

In the preferred embodiment of the invention, the first scans are scanning along a vertical direction, said first scans are performed at predetermined positions and at least one first scan is centered in the field of view. Advantageously, the first scans are distributed horizontally apart from each other and are each scanning a distinct area. In a very preferred embodiment, there are at least three first scans, including one centered in the field of view of the imager, said first scan being called "centered first scan". Preferably, other first scans are positioned fully within the field of view and distributed a determined distance compared to the centered first scan.

In the preferred embodiment, each first scan scans a line of pixels that is at least one pixel wide, and for each line scanned a grey level value is determined by calculating the average of grey level of pixels of said scanned line. From each first scan, a linear array is obtained calculating the average value of its pixels at the same height, if the width of said each first scan is greater than 1 pixel.

The Step E comprises at least one second substep E2, performed after substep E1 and consisting in determining a plurality of coincidence descriptors representative of whether the scans have crossed the linear part of the pattern. In the substep E2, the control unit considers that the first scans have crossed the linear part of the pattern when the peaks of grey level of each first scan have the same coordinates and the same amplitude. According to the invention, among the coincidence descriptors, there are position descriptors and amplitude descriptors.

According to the invention, the position descriptors include at least (i) an absolute position descriptor representative of the position of a peak of grey level of each first scans in a determined range and (ii) the second feature is a relative position descriptor representative of the distance between each peak of grey level of each first scans.

The absolute position descriptor of a first scan results from the comparison of the position of the peak of grey level of the first scan with a reference position independent from the position of the peaks of the other first scans, the value of the absolute position descriptor is increased by a predefined score, for example of 1, if the peak of grey level of the first scan is found by the control unit within a determined range and if each first scan has a peak of grey level, whereas if the value if this descriptor is zero, that means that no peak was found in any of the n scans and liquid is detected as making the pattern not visible to imager:

$$Absolute\ position\ descriptor = \sum_{i=1}^{n\ scans}(1\ if\ PEAK(i)\ absolute\ position\ is\ within\ a\ range, else\ 0)$$

According to the invention, the relative position descriptor results from the comparison of the position of the peak of grey level of each first scan with a mean peak position corresponding to the average of each position of peaks of grey level of each first scan : if the distance, in pixels, between the position of the peak of grey level and the mean peak position is within an expected range, the relative position descriptor has a predefined score, and if the distance, in pixels, between each peak and the mean peak position is out of the expected range, the relative position descriptor has a score of 0.

*Relative position descriptor =*

$$\sum_{i=1}^{n\;scans} (1 \; if \; PEAK(i) \, relative \; position \; is \; less \; than \; n \; pixels \; far, else \; 0)$$

According to one feature of the invention, the amplitude descriptors are calculated for each peak of grey level according to the formula :

$$Amplitude \; descriptor = \sum_{i=1}^{n\;scans}(1 \; if \; PEAK(i) \; amplitude \; is \; within \; a \; range, else \; 0)$$

If the difference, in grey levels, between each peak and the mean peak amplitude is within an expected range, the value of the amplitude descriptor is increased by a score of 1. The limits of the expected range are absolute values of grey levels, as grey levels are normalized and distributed over a full range (0-255) by preprocessing the image in advance.

If the distance, in grey levels, between each peak and the mean peak amplitude is out of the expected range, the score of the amplitude descriptor resulting is 0.

According to one feature of the invention, all coincidence descriptors are summed together in a According to one feature of the invention, all coincidence descriptors are summed together in a "overall descriptor" for the first scans.

According to the invention, possible translation of the pattern or glares due to presence of liquid can cause outlier peaks of grey level.

According to one feature of the invention, if peaks of grey level are found outside the expected range with an amplitude comprised above a predetermined threshold x%, for example 50%, of the mean amplitude of peaks found in the expected range, then the overall descriptor is decreased by a value of 1 for each outlier peak being found.

Outlier descriptor =

$$\sum_{i=1}^{N\;outlier\;peaks} (-1 \; if \; PEAK(i) \; amplitude \; is \; larger \; that \; x\% \; of \; mean \; amplitude \; of \; peaks, else \; 0)$$

Overall descriptor = absolute position descriptor + relative position descriptor + amplitude descriptor + outlier descriptor

The Step E comprises a third substep E3 performed after E1 and E2, and consisting in performing at least a plurality of second scans extending in the second direction and being distributed in the first direction apart from each other, said second scans scanning along in the first direction. In a preferred embodiment, the second scans are scanning along a horizontal direction, and are performed at predetermined positions and at least one second scan is centered in the field of view. Moreover, the second scans are distributed vertically and apart from each other and each scanning area of each second scan is distinct.

In a preferred embodiment, the plurality of second scans comprises at least three second scans, including one centered in the field of view of the imager, said second scan being called "centered second scan". Preferably, other second scans are positioned fully within the field of view and distributed at a determined distance compared to the centered second scan. More preferentially, other second scans are arranged upwardly and downwardly relative to the central second scan. Moreover, each second scan scans at least one row of pixels, which is at least one pixel high, and for each row scanned a grey level value is determined by calculating the average of grey level of pixels of said scanned row. If the height of the scanned row is greater than 1 pixel, then the a mean value for the scanned row is calculated.

The Step E comprises a fourth substep E4 performed after E3 and consisting in determining a plurality of line similarity descriptors showing if the scans overlap at least partially the pattern.

The substep E4 comprises a substep consisting in determining at least a first grey level function is determined by the point-to-point difference between values of grey level of the central second scan and the values of grey level of at least one upward second scan and at least a second grey level function is determined by the point-to-point difference between values of grey level of the central second scan and the values of grey level of at least one downward second scan.

If all the grey level functions are negative, the line similarity descriptor is considered null, if at least one grey level functions is positive, the line similarity descriptor is considered not null and therefore the linear part of the pattern of the image acquired may be legible by the imager.

The Step E comprises a fifth substep E5 of determining the profile of the linear part of the pattern consisting in comparing an average grey level of each grey level functions with each other, the grey level function with the greatest average grey level value is considered by the control unit as representing the most likely profile for the linear part of the pattern of the image acquired.

Advantageously, when the control unit considers that it is compatible with the absence of the liquid within the field of view, it means that the control unit considers that there is no liquid in the well. Advantageously, when the control unit considers that it is not compatible with the absence of the liquid within the field of view, it means that the control unit considers that there is liquid in the well.

In a preferred embodiment of the invention, steps E1 and E2 are performed before steps E3 and E4, but in an alternative embodiment, steps E3 and E4 can be performed before steps E1 and E2.

Ideally, in case of absence of the sample, the most likely profile for the linear part of the pattern should be very similar to the centered second scan, indeed other second scans, subtracted from the centered second scan, are supposed to be populated by zero or very low values (almost black points).

It is assessed how much every point of the most likely profile, ranges from the centered second scan. Specifically, there are a plurality of ranges and for each range, a score is assigned accordingly to each point of the most likely profile and to cumulate in a sum to compute the line similarity descriptor:

Such ranges can be defined with absolute values, as grey levels are normalized and distributed over a full range (0-255) by preprocessing the image in advance. Alternatively, in case a normalization is not done, the expected ranges could be determined as a certain percentage of the values of the central scan.

According to the invention, the detection method comprises a Step F consisting in assessing the presence of the liquid in the well of the support based on a percent index of visible pattern likelihood representative of the probability of the linear part of the pattern to be legible as expected in the field of view, the percent index of visible pattern likelihood being function of coincidence descriptors and line similarity descriptors.

The Step F comprises a substep F1 of normalizing the overall descriptor and the line similarity descriptors. The normalization of the overall descriptor is performed by transforming the [-N, 3*n first scans] range into a [0, 100] range wherein:

- 3 is the maximum value for the descriptor of each n first scan, as +1 can be given for the absolute position descriptor, +1 for the relative position descriptor and +1 for the amplitude descriptor,
- N is the number of outlier descriptors and contributing -1 each.

Moreover, the step F comprises a substep F2 of averaging the normalized overall descriptor and the normalized line similarity descriptor as following :

$$\text{Visible pattern likelihood index} = \text{normalized line similarity descriptor}/2 + \text{normalized overall descriptor}/2.$$

If the visible pattern likelihood index is within a determined range, the pattern of the acquired image is at the expected position based on a reference image, and therefore the control unit considers that it is compatible with the absence of the liquid within the field of view. If the percent index is out of the said determined range between 65% to 85%., the pattern of the acquired image is not at the expected position based on the reference image, the control unit considers that it is not compatible with the absence of the liquid within the field of view.

If the control unit detects lacks of liquid in the well, in at least one support (when several supports are loaded on the base), the entire load (all supports) is stopped, the user is warned by a display or sound alert or both, in order to fix and refill the empty well identified. When the well is filled , the process can continue.

Of course, the invention is not limited to the embodiments described and shown in the appended figures. Modifications remain possible, notably from the point of view of the constitution of the various elements or by substitution of technical equivalents, without thereby departing from the scope of protection of the invention defined by the claims.

## Claims

1. Detection method of liquid presence inside a well of a transparent or translucent support intended for analysis performed in a device for example for in vitro detection and/or quantification, the detection method comprising at least the following steps :

   A. providing a system (100) comprising :

- a support (110) comprising at least one well (111) configured to be filled with liquid to analyze,
- a device (120) for example for in vitro detection and/or quantification, comprising :

○ a base (121) configured to receive at least one support (110),
○ one control unit (122) storing at least one reference image,
○ one imager (123) with a field of view, the imager being controlled by the control unit and being configured to acquire at least one image of the field of view, the control unit being configured to process the at least one image acquired by the imager,

- at least one pattern (130) comprising at least one linear part (131), the pattern being arranged to be overlapped, at least partially, by the liquid to be analyzed, when the well is filled,

B. loading the support (110) on the base (121) of the device (120), the at least one well (111) of the support (110) being positioned in the field of view,
C. acquiring at least one image of the field of view by the imager (123),
D. sending the acquired image to the control unit (122),
E. determining the position of the pattern in the acquired image by :

E1. performing at least a plurality of first scans scanning along a first direction, said first scans being distributed in a direction different from the first direction
E2. determining a plurality of coincidence descriptors representative of whether the first scans have crossed the linear part of the pattern,
E3. performing at least a plurality of second scans extending in the second direction and
being distributed in the first direction apart from each other, said second scans scanning along the first direction,
E4. determining at least one line similarity descriptor showing if the second scans overlap at least partially the pattern,

F. assessing the presence of the liquid in the well (111) of the support (110) based on a percent index of visible pattern likelihood representative of the probability of the linear part of the pattern to be legible as expected in the field of view, the percent index of visible pattern likelihood being function of coincidence descriptors and line similarity descriptors.

2. Detection method according to claim 1, wherein the first scans are scanning along a vertical direction, said first scans are performed at predetermined positions and at least one first scan is centered in the field of view.

3. Detection method according to any of the claims 1 or 2, wherein in the substep E2, the control unit considers that the first scans have crossed the linear part of the pattern when the peaks of grey level of each first scan have the same coordinates and the same amplitude.

4. Detection method according to any of the claims 1 to 3, wherein among the coincidence descriptors, there are position descriptors and amplitude descriptors.

5. Detection method according to claim 4, wherein the position descriptors include at least (i) an absolute position descriptor representative of the position of a peak of grey level of each first scans in a determined range and (ii) the second feature is a relative position descriptor representative of the distance between each peak of grey level of each first scans.

6. Detection method according to claim 5, wherein the absolute position descriptor of a first scan results from the comparison of the position of the peak of grey level of the first scan with a reference position independent from the position of the peaks of the other first scans, the value of the absolute position descriptor is increased by a predefined score, for example of 1, if the peak of grey level of the first scan is found by the control unit within a determined range and if each first scan has a peak of grey level.

7. Detection method according to any of the claims 4 or 5, wherein the relative position descriptor results from the comparison of the position of the peak of grey level of each first scan with a mean peak position corresponding to the average of each position of peaks of grey level of each first scan : if the distance, in pixels, between the position of the peak of grey level and the mean peak position is within an expected range, the relative position descriptor has a predefined score, and if the distance, in pixels, between each peak and the mean peak position is out of the expected range, the relative position descriptor has a score of 0.

8. Detection method according to any of the claims 4 to 7, wherein the amplitude descriptors are calculated for each peak of grey level according to the formula :

$$\text{Amplitude descriptor} = \sum_{i=1}^{n\ scans}(1\ if\ PEAK(i)\ amplitude\ is\ within\ a\ range, else\ 0)$$

9. Detection method according to any of the claims 1 to 8, wherein the second scans are scanning along a horizontal direction, said second scans are performed at predetermined positions and at least one second scan is centered in the field of view.

10. Detection method according to any of the claims 1 to 9, wherein the substep E4 consisting in determining at least one line similarity descriptor comprises the following substep :

(iii) Determining n grey level functions based on comparison point-to-point between grey level values of the second centered scan and grey level values of at least one other second scan,
(iv) Determining the value of the line similarity descriptor based on the grey level functions determined previously.

11. Detection method according to any of the claims 1 to 10, wherein the step F comprises a substep F1 of normalizing the overall descriptor and the line similarity descriptors.

12. Detection method according to claim 11, wherein the step F comprises a substep F2 of averaging the normalized overall descriptor and the normalized line similarity descriptor as following :

Visible pattern likelihood index = normalized line similarity descriptor/2 + normalized overall descriptor/2.

13. System (100) for in vitro detection and/or quantification of at least one analyte in a biological sample, comprising :

a. an at least partially transparent or translucent support (110) comprising at least one well (111) configured to held a liquid,
b. a device (120) comprising :

- a base (121) configured to receive at least one support (110),
- one control unit (122),
- one imager (123) with a field of view, said imager being controlled by the control unit and being configured to acquire at least one image of at least one well of the support,

**characterized in that** the system comprises at least one pattern (130) comprising at least one linear part (131) and being intended to be overlapped, at least partially, by the liquid and **in that** the imager is configured to acquire at least one image of the field of view and **in that** the control unit is configured to determine the presence of the liquid in the well based on the at least one image acquired by the imager according to the detection method claimed in claim 1 to 12.

14. System according to claim 13, wherein the pattern (130) is directly etched on the base (121) of the device (120).

15. System according to any of the claims 13 or 14, wherein the imager (123) is configured to acquired and decode an identification code (114) of the support (110) when framed in the field of view, the imager being configured to send the decoded identification code (114) to the control unit.

121

120

Fig. 1

122

123

112

110

111

100

121

Fig. 2

114

113

112

131

130

110

130     Fig. 3     121

130

121

121

Fig. 4     121

121

Fig. 5

Fig. 6

Fig. 7

Fig. 8

Fig. 9

Fig. 10

```
┌─────────────┐
│      A      │
└─────────────┘
       │
┌─────────────┐
│      B      │
└─────────────┘
       │
┌─────────────┐
│      C      │
└─────────────┘
       │
┌─────────────┐
│      D      │
└─────────────┘
       │
┌─────────────┐
│      E      │
└─────────────┘
          │
      ┌────────┐
      │   E1   │
      └────────┘
      ┌────────┐
      │   E2   │
      └────────┘
      ┌────────┐
      │   E3   │
      └────────┘
      ┌────────┐
      │   E4   │
      └────────┘
      ┌────────┐
      │   E5   │
      └────────┘
          │
┌─────────────┐
│      F      │
└─────────────┘
          │
      ┌────────┐
      │   F1   │
      └────────┘
      ┌────────┐
      │   F2   │
      └────────┘
```

Fig. 11

Europäisches
Patentamt

European
Patent Office

Office européen
des brevets

## EUROPEAN SEARCH REPORT

Application Number

EP 20 21 3492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/106788 A1 (ROSSI VERONICA LUCIA [IT] ET AL) 19 April 2018 (2018-04-19) * abstract; figure 2 * ----- | 1-15 | INV. G06K9/32 G06K9/46 |
| A | US 9 632 031 B2 (BIOMERIEUX SA [FR]) 25 April 2017 (2017-04-25) * the whole document * ----- | 1-15 | |

TECHNICAL FIELDS
SEARCHED    (IPC)

G06K

The present search report has been drawn up for all claims

| Place of search | Date of completion of the search | Examiner |
|---|---|---|
| The Hague | 17 May 2021 | Mitzel, Dennis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 20 21 3492

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2021

| Patent document cited in search report | Publication date | Patent family member(s) | Publication date |
|---|---|---|---|
| US 2018106788 A1 | 19-04-2018 | CN 107533007 A | 02-01-2018 |
| | | EP 3289334 A2 | 07-03-2018 |
| | | FR 3035716 A1 | 04-11-2016 |
| | | JP 2018522209 A | 09-08-2018 |
| | | US 2018106788 A1 | 19-04-2018 |
| | | WO 2016174356 A2 | 03-11-2016 |
| US 9632031 B2 | 25-04-2017 | BR 112014007122 A2 | 11-04-2017 |
| | | CN 103874915 A | 18-06-2014 |
| | | EP 2776812 A1 | 17-09-2014 |
| | | FR 2980577 A1 | 29-03-2013 |
| | | JP 6239515 B2 | 29-11-2017 |
| | | JP 2014531019 A | 20-11-2014 |
| | | KR 20140067152 A | 03-06-2014 |
| | | US 2014252246 A1 | 11-09-2014 |
| | | WO 2013045807 A1 | 04-04-2013 |

EPO FORM P0459

For more details about this annex : see Official Journal of the European Patent Office, No. 12/82

**EP 4 012 610 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 10029471 A1